Europäisches Patentamt

European Patent Office

Office européen des brevets

(11) Publication number: **0 677 822 A2**

# EUROPEAN PATENT APPLICATION

(21) Application number: **95301554.2**

(22) Date of filing: **09.03.95**

(51) Int. Cl.⁶: **G06T 3/60**

(30) Priority: **15.04.94 CA 2121402**

(43) Date of publication of application:
**18.10.95 Bulletin 95/42**

(84) Designated Contracting States:
**DE FR GB IT**

(71) Applicant: **International Business Machines
Corporation
Old Orchard Road
Armonk, N.Y. 10504 (US)**

(72) Inventor: **Zhao, Albert Z.
7th, St. Dennis Drive,
Apt. 1817
Don Mills,
Ontario (CA)**

(74) Representative: **Davies, Simon Robert
I B M
UK Intellectual Property Department
Hursley Park
Winchester, Hampshire SO21 2JN (GB)**

(54) **Digital image rotation.**

(57) A method is provided for rotating bi-level image data by plus or minus 90°. An 8 x 8 pixel block is selected for rotation from the image data and, using lookup tables, an intermediate matrix is generated dynamically and stored into two 32-bit registers in the processor. Generation of the intermediate matrix partially rotates and stores the odd-numbered rows from the block of data in the first 32-bit register and the even-numbered rows from the block in the second 32-bit register. The first and second registers are copied, respectively, into third and fourth 32-bit registers. The first and second registers are then shifted one bit in opposite directions. The first register is logical ORed with the fourth register, and the second register is logical ORed with the third register so that the even bits are replaced in one register and the odd bits in the other. These steps are repeated for all remaining blocks of image data.

FIG. 4

EP 0 677 822 A2

The present invention relates to digital image processing, and more particularly to the rotation of bi-level images.

Bi-level images (also called monochrome images) are images having just two intensity levels (generally black and white or black and green) because their bi-level bitmaps contain a single bit per pixel. The entire bitmap for a screen for a resolution of 1,024 x 1,024 pixels is $2^{20}$ bits, or about 128,000 bytes.

Through the increasing proliferation in offices and home offices of high memory computers, such as workstations and personal computers, computer storage of office documentation, reports, forms, letters and even photographs, is becoming prevalent as a means for reducing physical storage requirements and improving accessability to common office files.

Documents are commonly received into computer systems by optical character reader (OCR) scan, facsimile or on-line data transmission. The challenge is to take the image of a document entered into a system, for example by OCR, and be able to manipulate it quickly and efficiently, so that it can be easily viewed by the end user.

Rotating a bi-level image by 90°, 180°, and 270° with respect to its orientation on input are among the most commonly used operations during document image processing. The traditional solution is to rotate the image one pixel at time, but this operation is very time consuming.

As a result, a number of methods have been proposed in the prior art for expediting image rotation, particularly plus or minus 90° rotations, since these are considerably more complex than 180° rotation due to the packed internal data representation of the image pixels, wherein each byte contains eight image pixels. The rotated image must occupy the same storage that contained the original image before rotation. Thus, for this type of rotation, the number of rows must be a multiple of eight, since the bits in each vertical column are packed into bytes by the rotation and a row of the output image must not end with a fraction of a byte. Consequently, placeholding data values must be added to columns that are not multiples of eight.

U.S. Patent Number 4,627,020 of IBM Corporation, sets forth a method for rotating an image by 90° that is considerably faster than the traditional method because it causes the rotation of up to 64 pixels (8 by 8 blocks) at a time, rather than just one pixel. A block of the image is moved into temporary storage (called a look-up table) and divided into smaller groups of bytes of rotatable size. Each group that does not have the same value for all bits is then rotated. This method takes advantage of the fact that large areas of most images are background colour (e.g. white), and that blocks or graphs of the image containing all one colour need not be rotated. This is an enhancement now commonly added to rotation methods. However, as will be seen, the method of the 4,627,020 patent is not as efficient as the method proposed in the present invention since it utilizes additional memory accesses and address manipulations for each byte rotated.

U.S. Patent Number 4,658,430, also of IBM Corporation, is directed to a method for rotating encoded data images that have, for example, been transmitted over a telephone line, by a multiple of 90°. The orientation of encoded data presents different problems from the rotation of the type of data to which the present invention is addressed.

U.S. Patent Number 4,837,845 of IBM Corporation is specifically directed to the problem of rotating binary image data plus or minus 90° from its original orientation. The image data is first stored in partially transposed form in a matrix contained in eight 32-bit registers. The matrix is separated into groups of bits of rotatable size (sub-matrices of equal size), and first preselected bit positions are transposed with second preselected bit positions in each group. Rows of bits in the groups are then exchanged with second rows of bits in the groups.

Each of these IBM patents discuss, as prior art, a number of much earlier publications and references directed to solving the problems associated with image rotation. It will be assumed that the reader of the present application is fully conversant with the contents of each of these IBM patents, which are incorporated herein by reference, particularly their sections describing the prior art.

In addition to the foregoing, U.S. Patent Number 4,916,746 of International Computers Limited discloses rotating an image through 90 degrees, either clockwise or counterclockwise, using a hardware rotation circuit. The rotation circuit comprises a FIFO and shift register, where data is read out of the FIFO a word at a time and written back into the FIFO with a displacement of one bit, effecting a spiral data path. The shift register is then used to assemble the output rotated image data.

U.S. Patent Number 4,985,849 of Canon K.K. discloses an image processing system for forming a slantwise mapped or rotated modified image of an original image. The relation between the address locations of the original points of data and the output points is calculated, and these calculated values are prestored in lookup tables. The image data from the original address locations is then transferred or copied using the output address information from the lookup tables.

U.S. Patent Number 5,067,167 of Cornell Research Foundation Inc. discloses rotating a three-dimensional image by 90° by using a data processor to modify the original spacial coordinate values of the three-dimensional image.

U.S. Patent Number 5,233,168 of Pitney Bowes Inc. discloses de-skewing an image by scanning the image to capture a pixel by pixel mapped image, determining size and skew of the mapped image, performing a series of area-limited vertical pixel shifts, and performing a series of area-limited horizontal pixel shifts.

Other approaches to providing rapid image rotation have been hardware specific solutions, such as a special hardware device called a rotation buffer disclosed in U.S. Patent Number 4,947,344 of IBM Corporation or special circuitry disclosed in U.S. Patent number 4,992,960 of Yamaha Corporation. However, these types of hardware solutions require considerable costs associated with modified existing hardware; as opposed to a solution implemented in software for maximizing the existing hardware storage capabilities.

Accordingly, the invention provides a method of rotating by 90° a block of bi-level image data having 8 rows by 8 columns of pixel data bits in a computer system supporting a 32-bit operating system. The method includes the steps of generating an intermediate matrix having 8 rows by 8 columns of pixel data bits, wherein each row from the block has been divided and translated into a paired nibble column, alternate rows from the block being arranged transversely and lower order rows from the block being arranged on top of adjacent higher order rows in the paired nibble columns of the intermediate matrix and saving the rows of the intermediate matrix sequentially into first and second 32-bit registers. The first 32-bit register is then copied into a third 32-bit register and the second 32-bit register into a fourth 32-bit register. Each of the first and second registers is shifted by one bit in opposite directions and alternate bits from the fourth register are dynamically overlaid onto the first register while alternate bits from the third register are dynamically overlaid onto the second register.

Like the methods disclosed in the above-referenced IBM patents ('020, '430, and '845), the present invention also works on 64 pixel blocks of image data at a time in expediting image rotation to an orientation of 90° or 270° from its orientation on input. However, because the above method requires fewer memory accesses than the prior art methods, it has been found to be 15 to 30% faster in operation on conventional IBM PC workstations having 32-bit registers, which is the type of environment to which the method is primarily directed.

A clockwise rotation is produced in the preferred embodiment by the the step of generating an intermediate matrix comprising generating an intermediate matrix wherein the alternate rows are arranged transversely from right to left, and wherein higher order bits from each divided row are arranged on top of lower order bits; the step of shifting each of the first and second registers by one bit in opposite directions comprising shifting the first register by one bit right and shifting the second register by one bit left; and the step of overlaying alternate bits further comprising the steps of zeroing out all the even bits of the first and fourth registers and all odd bits of the second and third registers, and logical ORing the first register with the fourth register and the second register with the third register.

Converse operations can be performed as explained in more detail below in order to produce a counter-clockwise rotation.

In the preferred embodiment, the step of generating an intermediate matrix comprises:

obtaining a first set of 4-byte values from at least one lookup table for each odd-numbered row from the block and dynamically overlaying said first set of 4-byte values in the first 32-bit register; and

obtaining a second set of 4-byte values from said at least one lookup table for each even-numbered row from the block and dynamically overlaying said second set of 4-byte values in the second 32-bit register.

It is further preferred that there are four lookup tables, each lookup table being adapted for generating 4-byte values for at least two rows from the block; and means for dynamically overlaying 4-byte values from alternate rows from the block into one of said registers to generate the intermediate matrix. Note that the use of a look-up table is fast and convenient, but other approaches could in principle be used (eg derivation of an appropriate logical expression).

The above-described method rotates a 8x8 pixel block, although the approach is readily applied to a whole image, by first dividing the image up into suitably sized blocks, which are then individually rotated before being reassembled to form the final image. This division of the image into suitable blocks and reassembly after rotation of the individual blocks is well-known from the prior art.

The invention further provides apparatus for rotating by 90° a block of bi-level image data having 8 rows by 8 columns of pixel data bits in a computer system supporting a 32-bit operating system, comprising:

means for generating an intermediate matrix having 8 rows by 8 columns of pixel data bits from the block, wherein each row from the block is divided and translated into a paired nibble column, alternate rows from the block being arranged transversely and lower order rows from the block being arranged on top of higher order rows in the paired nibble columns of the intermediate matrix;

at least first, second, third, and fourth 32-bit processor registers, the first and third registers for saving, in duplicate, the first four rows of the intermediate matrix and the second and fourth registers for saving, in duplicate, the remaining four rows of the intermediate matrix;

means for shifting each of the first and second registers by one bit in opposite directions; and

means for overlaying alternate bits from the fourth register onto the first register and from the third register onto the second register.

A preferred embodiment of the invention will now be described in detail by way of example only, with reference to the following drawings:

Figure 1 is a schematic representation of a typical operating system and computer workstation;

Figures 2 and 3 illustrate the display screen of a personal computer or workstation showing a document at two different orientations, rotated by 90° with respect to one another; and

Figure 4 is a flow diagram illustrating the steps in rotating a image 90° clockwise or counterclockwise.

The present invention is particularly adapted to implementation in a 32-bit programming operating system environment such as IBM's OS/2 system, Posix Unix systems or Microsoft's Windows NT system, running on a conventional computer, such as an IBM PC workstation.

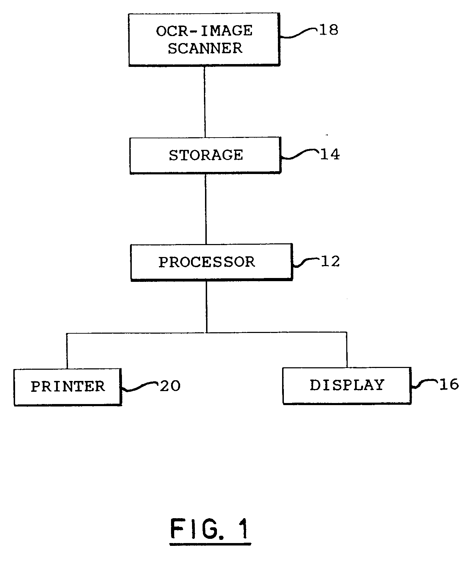

The elements of such a system are illustrated schematically in Figure 1, and typically include a processor 12 having 32-bit storage registers, an image storage 14, a display terminal 16, means for receiving image data, such as an OCR-image scanner 18, and a printer 20. Other means for receiving image data into the operating system would include data transmission and facsimile. The display terminal 16, the image scanner 18 and the printer 20 each may have different requirements for reading or presentation of a document or image. Accordingly, the processor 12 in conjunction with image storage 14 will be required to manipulate the image data to meet the presentation requirements of each of the peripheral devices 16, 18 and 20.

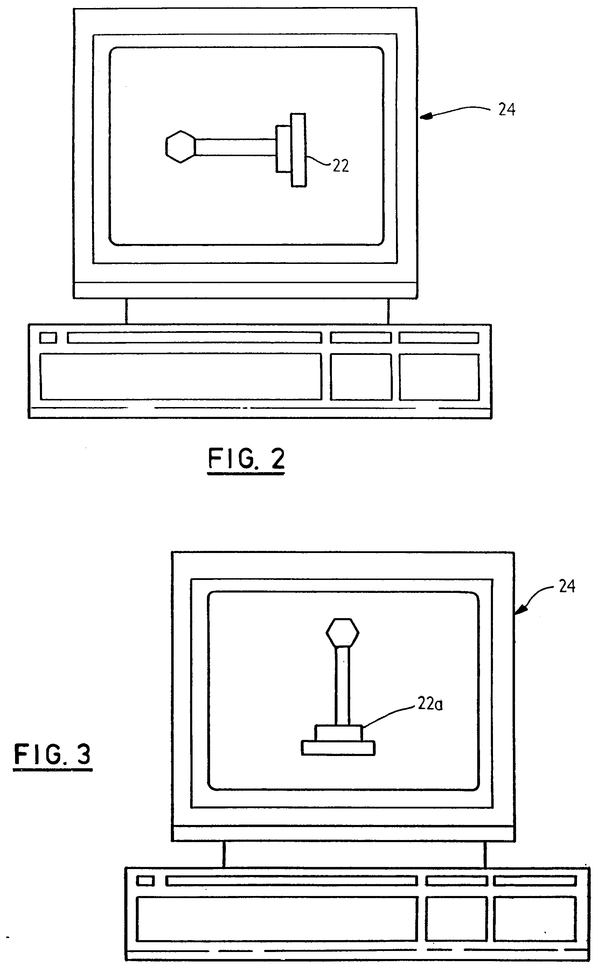

For example, a photographic image may be scanned into the system via scanner 18 and end up as a horizontally displayed image 22 on a computer display 24, such as illustrated in Figure 2. In order for the end user to use the displayed image in any meaningful way, the orientation of the image must be rotated 90° clockwise to the position 22a shown on the computer display 24 in Figure 3.

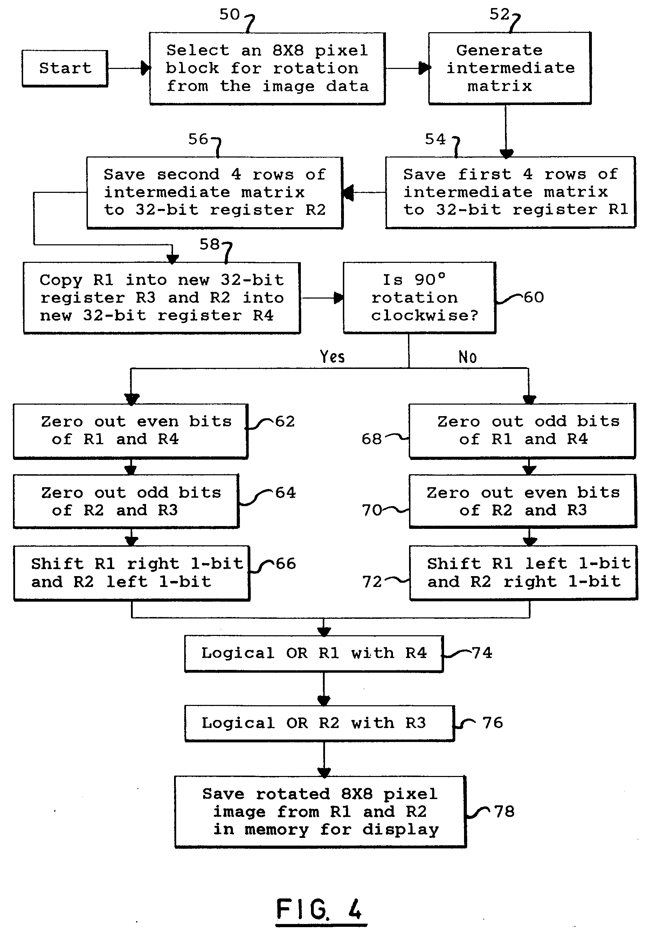

The steps of the method are illustrated in the flow diagram of Figure 4. As discussed earlier, the image data is rotated in 8 by 8 pixel block segments. Thus, an 8 by 8 pixel block segment selected from the stored data of the entire image (block 50 in Figure 4) may be represented by the 64 bit matrix set forth below in Table A:

TABLE A

| Row 1 | A7 | A6 | A5 | A4 | A3 | A2 | A1 | A0 |
|---|---|---|---|---|---|---|---|---|
| Row 2 | B7 | B6 | B5 | B4 | B3 | B2 | B1 | B0 |
| Row 3 | C7 | C6 | C5 | C4 | C3 | C2 | C1 | C0 |
| Row 4 | D7 | D6 | D5 | D4 | D3 | D2 | D1 | D0 |
| Row 5 | E7 | E6 | E5 | E4 | E3 | E2 | E1 | E0 |
| Row 6 | F7 | F6 | F5 | F4 | F3 | F2 | F1 | F0 |
| Row 7 | G7 | G6 | G5 | G4 | G3 | G2 | G1 | G0 |
| Row 8 | H7 | H6 | H5 | H4 | H3 | H2 | H1 | H0 |
| Where A0, A1, ......, H6, H7 each represent a bi-level pixel forming the matrix. | | | | | | | | |

Clockwise 90° rotation of the matrix of Table A turns the matrix on its side so that Row 1 becomes the right-hand column of 8 bits, with the A0 pixel at the bottom. Counterclockwise 90° rotation turns the matrix so that Row 1 becomes the left-hand column of 8 bits, with the A0 pixel at the top. These two resulting data representations are illustrated in Tables D and F in this description.

The same general principles and functions are applied to achieve both clockwise and counterclockwise rotation. However, as will be discussed in detail below, the functions are reversed, in many cases, to achieve counterclockwise, rather than clockwise, rotation.

The working area for transforming the image data comprises 32-bit registers in the processor, from which the transformed data is moved back to the memory (storage) ready for display or printing. A 64-bit matrix can be stored in two 32-bit registers.

The rotation is performed in four main steps. First, an intermediate matrix is generated that sets the foundation for dividing the matrix into two register-size rows of 4-bytes each. The intermediate matrix is stored in the two target 32-bit registers, and then copied into a further pair of 32-bit registers. The data in the four registers is then manipulated, and the four registers are finally collapsed back into the original two that now contain the rotated data image.

Throughout, only three memory accesses per byte (or 24 per block) are required, first when the byte is read in a processor register, next when the value is used to access a lookup table for generating the intermediate matrix, and a final memory access to save the rotated data back in memory.

This represents a 25% reduction over the next fastest rotation method of the prior art (which requires four memory accesses per byte or 32 for a full block), and accounts for the improved speed of the method.

According to a preferred embodiment of the invention, the selected 8 by 8 pixel matrix or block of image data is transformed into an intermediate matrix (block 52), that is re-arranged in a manner that starts the process of re-aligning the pixels to a position more proximate to their position following complete rotation. In the case of an intended 90° clockwise rotation, the intermediate matrix is as set out in Table B:

TABLE B

| Row 1 | G7 | G3 | E7 | E3 | C7 | C3 | A7 | A3 |
|-------|----|----|----|----|----|----|----|----|
| Row 2 | G6 | G2 | E6 | E2 | C6 | C2 | A6 | A2 |
| Row 3 | G5 | G1 | E5 | E1 | C5 | C1 | A5 | A1 |
| Row 4 | G4 | G0 | E4 | E0 | C4 | C0 | A4 | A0 |
| Row 5 | H7 | H3 | F7 | F3 | D7 | D3 | B7 | B3 |
| Row 6 | H6 | H2 | F6 | F2 | D6 | D2 | B6 | B2 |
| Row 7 | H5 | H1 | F5 | F1 | D5 | D1 | B5 | B1 |
| Row 8 | H4 | H0 | F4 | F0 | D4 | D0 | B4 | B0 |

The partial rearrangement for rotation effectively divides and translates each row into a pair of nibble columns. The first four rows of the intermediate matrix contain the translated paired nibble columns of the odd-numbered rows from the original block of data (ie., rows A, C, E and G) arranged transversely. In the case of a clockwise rotation, the transverse arrangement is from right to left, with the higher order bits from each half-row arranged on top of the lower order bits. For counterclockwise rotation, it will be seen from reviewing Table E that the transverse arrangement is from left to right, with the lower order bits arranged on top of the higher order bits from each half row. The bottom four rows of the intermediate matrix contain the even-numbered rows from the original block of data (ie., rows B, D, F, and H) in the same arrangement as the upper four rows.

In a preferred embodiment of the invention, the intermediate matrix is generated using four lookup tables, which are set out in the accompanying Appendix.

Each of the four lookup tables is responsible for converting two rows in the 8 by 8 pixel matrix. For clockwise rotation, Table 1 from the Appendix is used for converting Rows 1 and 2, Table 2 for Rows 3 and 4, Table 3 for Rows 5 and 6, and Table 4 for Rows 7 and 8, and the rows are converted alternately (ie. rows 1, 3, 5 and 7, followed by rows 2, 4, 6 and 8). For counterclockwise rotation, the lookup tables are used in the reverse order, that is, Table 1 is used for converting Rows 8 and 7, Table 2 for Rows 6 and 5, Table 3 for Rows 4 and 3, and Table 4 for Rows 2 and 1.

Generation of the intermediate matrix, in the preferred embodiment, is by dynamic overlay with the results being saved immediately to two 32-bit processor registers.

Use of the lookup tables for a 90° clockwise rotation can be illustrated by the following example, starting with the bi-level 8 by 8 pixel matrix in binary notation set out in Table C.

TABLE C

| Row 1 | 0 | 0 | 0 | 0 | 1 | 1 | 1 | 1 |
|-------|---|---|---|---|---|---|---|---|
| Row 2 | 0 | 0 | 0 | 0 | 0 | 0 | 1 | 1 |
| Row 3 | 0 | 0 | 0 | 1 | 0 | 1 | 0 | 0 |
| Row 4 | 0 | 0 | 0 | 1 | 0 | 1 | 0 | 1 |
| Row 5 | 0 | 0 | 1 | 1 | 0 | 0 | 0 | 0 |
| Row 6 | 0 | 1 | 0 | 1 | 1 | 1 | 0 | 0 |
| Row 7 | 0 | 0 | 1 | 0 | 1 | 1 | 1 | 0 |
| Row 8 | 0 | 0 | 1 | 0 | 0 | 0 | 1 | 0 |

First, for row 1, entry 15 of lookup table 1 is used:

```
**** Lookup Table 1:
              FROM                                    TO
ROW    BINARY REPRESENTATION           BINARY REPRESENTATION
15          00001111          00000001  00000001 00000001 00000001
```

This 32-bit value is saved in register R1 as:

```
                    BYTE 3       BYTE 2       BYTE 1       BYTE 0
        R1         00000001     00000001     00000001     00000001
```

Next, for row 3, entry 20 of lookup table 2 is used:

```
**** LOOKUP TABLE 2:
              FROM                                    TO
ROW    BINARY REPRESENTATION           BINARY REPRESENTATION
20          00010100          00000000  00000100  00000000 00001000
```

This value is logical ORed, or dynamically overlaid with the 4-byte value for row 1, in which any "one" value from either 4-byte row replaces a "zero" value. The resulting revision of the first 32-bit register is:

```
                    BYTE 3       BYTE 2       BYTE 1       BYTE 0
        R1         00000001     00000101     00000001     00001001
```

Next, for row 5, entry 48 of lookup table 3 is used:

```
**** LOOKUP TABLE 3
              FROM                                    TO
ROW    BINARY REPRESENTATION           BINARY REPRESENTATION
48          00110000          00000000  00000000  00100000 00100000
```

When this 4-byte value is logical ORed with the contents of R1 the following register value results:

```
                    BYTE 3      BYTE 2      BYTE 1      BYTE 0
         R1        00000001    00000101    00100001    00101001
```

Finally, for row 7, entry 46 of lookup table 4 is used:

```
****LOOKUP TABLE 4:
              FROM                              TO
ROW    BINARY REPRESENTATION        BINARY REPRESENTATION
46          00101110        01000000  01000000  11000000 00000000
```

After logical ORing R1 with the value, register R1 contains:

```
                    BYTE 3      BYTE 2      BYTE 1      BYTE 0
         R1        01000001    01000101    11100001    00101001
```

Repeating the same procedures for row 2, 4, 6 and 8, using lookup table 1, 2, 3, and 4 respectively, the result is saved in R2 as:

```
                 BYTE 3      BYTE 2      BYTE 1      BYTE 0
       R2        00010000    00110100    11000001    00101101
```

This completes the process of the intermediate matrix generation. To clarify the results, the contents of R1 and R2 may be displayed in terms of bytes with higher-order bytes on top of lower order bytes in a matrix-like format as follows:

| R1 BYTE 3 | 0 1 0 0 0 0 0 1 |
|-----------|-----------------|
| R1 BYTE 2 | 0 1 0 0 0 1 0 1 |
| R1 BYTE 1 | 1 1 1 0 0 0 0 1 |
| R1 BYTE 0 | 0 0 1 0 1 0 0 1 |
| R2 BYTE 3 | 0 0 0 1 0 0 0 0 |
| R2 BYTE 2 | 0 0 1 1 0 1 0 0 |
| R3 BYTE 1 | 1 1 0 0 0 0 0 1 |
| R3 BYTE 0 | 0 0 1 0 1 1 0 1 |

Therefore, returning to the original generic example, the first four rows (or first four-byte row) of the intermediate matrix are saved into the first 32-bit register R1 (block 54) of Figure 4, and the remaining four rows (or second four-byte row) of the matrix are saved into a second 32-bit register R2 (block 56). Thus, in a 32-bit environment, the intermediate matrix is held in the two 32-bit registers in R1 and R2 in the following representation:

| R1: G7 G3 E7 E3 C7 C3 A7 A3 | G6 G2 E6 E2 C6 C2 A6 A2 | G5 G1 E5 E1 C5 C1 A5 A1 | G4 G0 E4 E0 C4 C0 A4 A0 |
|---|---|---|---|
| R2: H7 H3 F7 F3 D7 D3 B7 B3 | H6 H2 F6 F2 D6 D2 B6 B2 | H5 H1 F5 F1 D5 D1 B5 B1 | H4 H0 F4 F0 D4 D0 B4 B0 |

7

The contents of registers R1 and R2 are then copied to two other 32-bit registers R3 and R4 respectively (block 58) to achieve the following representation:

| R1: G7 G3 E7 E3 C7 C3 A7 A3 | G6 G2 E6 E2 C6 C2 A6 A2 | G5 G1 E5 E1 C5 C1 A5 A1 | G4 G0 E4 E0 C4 C0 A4 A0 |
| R2: H7 H3 F7 F3 D7 D3 B7 B3 | H6 H2 F6 F2 D6 D2 B6 B2 | H5 H1 F5 F1 D5 D1 B5 B1 | H4 H0 F4 F0 D4 D0 B4 B0 |
| R3: G7 G3 E7 E3 C7 C3 A7 A3 | G6 G2 E6 E2 C6 C2 A6 A2 | G5 G1 E5 E1 C5 C1 A5 A1 | G4 G0 E4 E0 C4 C0 A4 A0 |
| R4: H7 H3 F7 F3 D7 D3 B7 B3 | H6 H2 F6 F2 D6 D2 B6 B2 | H5 H1 F5 F1 D5 D1 B5 B1 | H4 H0 F4 F0 D4 D0 B4 B0 |

When the rotation is an 90° clockwise rotation (block 60), the even bits R1 and R4 are zeroed out (block 62) and the odd bits of R2 and R3 are zeroed out (block 64), to yield the following changes in the registers:

| R1:  G7 00 E7 00 C7 00 A7 00 | G6 00 E6 00 C6 00 A6 00 | G5 00 E5 00 C5 00 A5 00 | G4 00 E4 00 C4 00 A4 00 |
| R2:  00 H3 00 F3 00 D3 00 B3 | 00 H2 00 F2 00 D2 00 B2 | 00 H1 00 F1 00 D1 00 B1 | 00 H0 00 F0 00 D0 00 B0 |
| R3;  00 G3 00 E3 00 C3 00 A3 | 00 G2 00 E2 00 C2 00 A2 | 00 G1 00 E1 00 C1 00 A1 | 00 G0 00 E0 00 C0 00 A0 |
| R4:  H7 00 F7 00 D7 00 B7 00 | H6 00 F6 00 D6 00 B6 00 | H5 00 F5 00 D5 00 B5 00 | H4 00 F4 00 D4 00 B4 00 |

The contents of R1 are then shifted right by one bit and the contents of R2 are shifted left by one bit (block 66), so that the contents of the four registers appears as follows:

| R1: 00 G7 00 E7 00 C7 00 A7 | 00 G6 00 E6 00 C6 00 A6 | 00 G5 00 E5 00 C5 00 A5 | 00 G4 00 E4 00 C4 00 A4 |
| R2: H3 00 F3 00 D3 00 B3 00 | H2 00 F2 00 D2 00 B2 00 | H1 00 F1 00 D1 00 B1 00 | H0 00 F0 00 D0 00 B0 00 |
| R3: 00 G3 00 E3 00 C3 00 A3 | 00 G2 00 E2 00 C2 00 A2 | 00 G1 00 E1 00 C1 00 A1 | 00 G0 00 E0 00 C0 00 A0 |
| R4: H7 00 F7 00 D7 00 B7 00 | H6 00 F6 00 D6 00 B6 00 | H5 00 F5 00 D5 00 B5 00 | H4 00 F4 00 D4 00 B4 00 |

Next R1 is logical ORed with R4 (block 74) and R2 is logical ORed with R3 (block 76) to achieve the following content of registers R1 and R2:

| R1: H7 G7 F7 E7 D7 C7 B7 A7 | H6 G6 F6 E6 D6 C6 B6 A6 | H5 G5 F5 E5 D5 C5 B5 A5 | H4 G4 F4 E4 D4 C4 B4 A4 |
| R2: H3 G3 F3 E3 D3 C3 B3 A3 | H2 G2 F2 E2 D3 C2 B2 A2 | H1 G1 F1 E1 D1 C1 B1 A1 | H0 G0 F0 E0 D0 C0 B0 A0 |

In matrix formation, R1 and R2 now contain the rotated 8 by 8 pixel matrix:

TABLE D

| R1: | | | | | | | |
|---|---|---|---|---|---|---|---|
| H7 | G7 | F7 | E7 | D7 | C7 | B7 | A7 |
| H6 | G6 | F6 | E6 | D6 | C6 | B6 | A6 |
| H5 | G5 | F5 | E5 | D5 | C5 | B5 | A5 |
| H4 | G4 | F4 | E4 | D4 | C4 | B4 | A4 |
| R2: | | | | | | | |
| H3 | G3 | F3 | E3 | D3 | C3 | B3 | A3 |
| H2 | G2 | F2 | E2 | D2 | C2 | B2 | A2 |
| H1 | G1 | F1 | E1 | D1 | C1 | B1 | A1 |
| H0 | G0 | F0 | E0 | D0 | C0 | B0 | A0 |

A 90° counterclockwise rotation is achieved following a similar method. Generation of the intermediate matrix, as mentioned above, is performed in the preferred embodiment using the lookup tables in reverse order, to generate an intermediate matrix from Table A, as follows:

TABLE E

| Row 1 | A4 | A0 | C4 | C0 | E4 | E0 | G4 | G0 |
|---|---|---|---|---|---|---|---|---|
| Row 2 | A5 | A1 | C5 | C1 | E5 | E1 | G5 | G1 |
| Row 3 | A6 | A2 | C6 | C2 | E6 | E2 | G6 | G2 |
| Row 4 | A7 | A3 | C7 | C3 | E7 | E3 | G7 | G3 |
| Row 5 | B4 | B0 | D4 | D0 | F4 | F0 | H4 | H0 |
| Row 6 | B5 | B1 | D5 | D1 | F5 | F1 | H5 | H1 |
| Row 7 | B6 | B2 | D6 | D2 | F6 | F2 | H6 | H2 |
| Row 8 | B7 | B3 | D7 | D3 | F7 | F3 | H7 | H3 |

In a 32-bit environment, the above intermediate matrix can be held in the two 32-bit registers R1 and R2 (blocks 54 and 56) in the following representation:

| R1: A7 A3 C7 C3 E7 E3 G7 G3 | A6 A2 C6 C2 E6 E2 G6 G2 | A5 A1 C5 C1 E5 E1 G5 G1 | A4 A0 C4 C0 E4 E0 G4 G0 |
|---|---|---|---|
| R2: B7 B3 D7 D3 F7 F3 H7 H3 | B6 B2 D6 D2 F6 F2 H6 H2 | B5 B1 D5 D1 F5 F1 H5 H1 | B4 B0 D4 D0 F4 F0 H4 H0 |

The contents of R1 and R2 are then copied to the two other 32-bit registers R3 and R4, respectively (block 58):

| R1: A7 A3 C7 C3 E7 E3 G7 G1 | A6 A2 C6 C2 E6 E2 G6 G2 | A5 A1 C5 C1 E5 E1 G5 G1 | A4 A0 C4 C0 E4 E0 G4 G0 |
|---|---|---|---|
| R2: B7 B3 D7 D3 F7 F3 H7 H3 | B6 B2 D6 D2 F6 F2 H6 H2 | B5 B1 D5 D1 F5 F1 H5 H1 | B4 B0 D4 D0 F4 F0 H4 H0 |
| R3: A7 A3 C7 C3 E7 E3 G7 G1 | B6 B2 D6 D2 F6 F2 H6 H2 | B5 B1 D5 D1 F5 F1 H5 H1 | B4 B0 D4 D0 F4 F0 H4 H0 |
| R4: B7 B3 D7 D3 F7 F3 H7 H3 | B6 B2 D6 D2 F6 F2 H6 H2 | B5 B1 D5 D1 F5 F1 H5 H1 | B4 B0 D4 D0 F4 F0 H4 H0 |

For the counterclockwise rotation (block 60), the odd bits of R1 and R4 are zeroed out (block 68) and the even bits of R2 and R3 are zeroed out (block 70). This changes the contents of the four registers as follows:

```
R1: 00 A3 00 C3 00 E3 00 G3   00 A2 00 C2 00 E2 00 G2   00 A1 00 C1 00 E1 00 G1   00 A0 00 C0 00 E0 00 G0
R2: B7 00 D7 00 F7 00 H7 00   B6 00 D6 00 F6 00 H6 00   B5 00 D5 00 F5 00 H5 00   B4 00 D4 00 F4 00 H4 00

R3: A7 00 C7 00 E7 00 G7 00   A6 00 C6 00 E6 00 G6 00   A5 00 C5 00 E5 00 G5 00   A4 00 C4 00 E4 00 G4 00
R4: 00 B3 00 D3 00 F3 00 H3   00 B2 00 D2 00 F2 00 H2   00 B1 00 D1 00 F1 00 H1   00 B0 00 D0 00 F0 00 H0
```

The contents of R1 are shifted left by 1 bit and the contents of R2 (block 72) shifted right by one bit so that the 4 registers now appear as:

```
R1: A3 00 C3 00 E3 00 G3 00   A2 00 C2 00 E2 00 G2 00   A1 00 C1 00 E1 00 G1 00   A0 00 C0 00 E0 00 G0 00
R2: 00 B7 00 D7 00 F7 00 H7   00 B6 00 D6 00 F6 00 H6   00 B5 00 D5 00 F5 00 H5   00 B4 00 D4 00 F4 00 H4

R3: 07 00 C7 00 E7 00 G7 00   A6 00 C6 00 E6 00 G6 00   A5 00 C5 00 E5 00 G5 00   A4 00 C4 00 E4 00 G4 00
R4: 00 B3 00 D3 00 F3 00 H3   00 B2 00 D2 00 F2 00 H2   00 B1 00 D1 00 F1 00 HI   00 B0 00 D0 00 F0 00 H0
```

R1 is logical ORed with R4 (block 74), and R2 with R3 (block 76). The first two registers then have the following representation:

```
R1: A3 B3 C3 D3 E3 F3 G3 H3   A2 B2 C2 D2 E2 F2 G2 H2   A1 B1 C1 D1 E1 F1 G1 H1   A0 B0 C0 D0 E0 F0 G0 H0

R2: A7 B7 C7 D7 E7 F7 G7 H7   A6 B6 C6 D6 E6 F6 G6 H6   A5 B5 C5 D5 E5 F5 G5 H5   A4 B4 C4 D4 E4 F4 G4 H4
```

R1 and R2 now contain the 8 by 8 pixel matrix rotated 90° counterclockwise from the original orientation. Presented in matrix formation, the data appears as follows:

TABLE F

| R1: | | | | | | | |
|---|---|---|---|---|---|---|---|
| A0 | B0 | C0 | D0 | E0 | F0 | G0 | H0 |
| A1 | B1 | C1 | D1 | E1 | F1 | G1 | H1 |
| A2 | B2 | C2 | D2 | E2 | F2 | G2 | H2 |
| A3 | B3 | C3 | D3 | E3 | F3 | G3 | H3 |
| R2: | | | | | | | |
| A4 | B4 | C4 | D4 | E4 | F4 | G4 | H4 |
| A5 | B5 | C5 | D5 | E5 | F5 | G5 | H5 |
| A6 | B6 | C6 | D6 | E6 | F6 | G6 | H6 |
| A7 | B7 | C7 | D7 | E7 | F7 | G7 | H7 |

In the preferred embodiment implemented on an IBM 32-bit machine, such as an IBM PC workstation, the above method runs consistently faster, and has less overhead when ported across 32-bit platforms, than previously known methods. Test results have indicated that the present method is over 30% faster on conventional IBM PC workstations, and the result would be even better if cache memories were used.

**Claims**

1. A method of rotating by 90° a block of bi-level image data having 8 rows by 8 columns of pixel data bits in a computer system supporting a 32-bit operating system, comprising the steps of:

     generating an intermediate matrix having 8 rows by 8 columns of pixel data bits, wherein each row from the block is divided and translated into a paired nibble column, alternate rows from the block being arranged transversely and lower order rows from the block being arranged on top of higher order rows in the paired nibble columns of the intermediate matrix;

     saving the rows of the intermediate matrix sequentially into first and second 32-bit processor registers;

     copying the first 32-bit register into a third 32-bit processor register and the second 32-bit register into a fourth 32-bit processor register;

     shifting each of the first and second registers by one bit in opposite directions; and

     overlaying alternate bits from the fourth register onto the first register and from the third register onto the second register.

2. The method according to claim 1, wherein the step of generating an intermediate matrix comprises generating an intermediate matrix wherein the alternate rows are arranged transversely from right to left, and wherein higher order bits from each divided row are arranged on top of lower order bits.

3. The method according to claim 2, wherein the step of shifting each of the first and second registers by one bit in opposite directions comprises shifting the first register by one bit right and shifting the second register by one bit left.

4. The method according to claim 3, wherein the step of overlaying alternate bits further comprises the steps of zeroing out all the even bits of the first and fourth registers and all odd bits of the second and third registers, and logical ORing the first register with the fourth register and the second register with the third register.

5. The method according to claim 1, wherein the step of generating an intermediate matrix comprises generating an intermediate matrix wherein the alternate rows are arranged transversely from left to right, and wherein lower order bits from each divided row are arranged on top of higher order bits.

6. The method according to claim 5, wherein the step of shifting each of the first and second registers by one bit in opposite directions comprises shifting the first register by one bit left and shifting the second register by one bit right.

7. The method according to claim 6, wherein the step of overlaying alternate bits further comprises the steps of zeroing out all odd bits of the first and fourth registers and all even bits of the second and third registers, and logical ORing the first register with the fourth register and the second register with the third register.

8. The method according to any preceding claim, wherein the step of generating an intermediate matrix comprises:

     obtaining a first set of 4-byte values from at least one lookup table for each odd-numbered row from the block and dynamically overlaying said first set of 4-byte values in the first 32-bit register; and

     obtaining a second set of 4-byte values from said at least one lookup table for each even-numbered row from the block and dynamically overlaying said second set of 4-byte values in the second 32-bit register.

9. A method of rotating by 90° a bi-level image in a computer system supporting a 32-bit operating system, comprising the steps of:

     selecting an unrotated block of data from the image having 8 rows by 8 columns of pixels;

     rotating the selected block of image data according to the method of any preceding claim; and

     repeating the above for each 8 by 8 pixel block in the image.

10. Apparatus for rotating by 90° a block of bi-level image data having 8 rows by 8 columns of pixel data bits in a computer system supporting a 32-bit operating system, comprising:

means for generating an intermediate matrix having 8 rows by 8 columns of pixel data bits from the block, wherein each row from the block is divided and translated into a paired nibble column, alternate rows from the block being arranged transversely and lower order rows from the block being arranged on top of higher order rows in the paired nibble columns of the intermediate matrix;

at least first, second, third, and fourth 32-bit processor registers, the first and third registers for saving, in duplicate, the first four rows of the intermediate matrix and the second and fourth registers for saving, in duplicate, the remaining four rows of the intermediate matrix;

means for shifting each of the first and second registers by one bit in opposite directions; and

means for overlaying alternate bits from the fourth register onto the first register and from the third register onto the second register.

11. Apparatus according to claim 10, wherein the means for generating an intermediate matrix comprises at least one lookup table.

12. Apparatus according to claim 11, wherein said at least one lookup table comprises multiple look tables, each lookup table being adapted for generating a 4-byte value for at least one row from the block.

13. Apparatus according to claim 12, wherein the means for generating an intermediate matrix comprises:

four lookup tables, each lookup table being adapted for generating 4-byte values for at least two rows from the block; and

means for dynamically overlaying 4-byte values from alternate rows from the block into one of said registers.

```
   ┌─────────────────┐
   │   OCR-IMAGE      │ ⟋18
   │    SCANNER       │
   └─────────────────┘
            │
   ┌─────────────────┐
   │    STORAGE       │ ⟋14
   └─────────────────┘
            │
   ┌─────────────────┐
   │   PROCESSOR      │ ⟋12
   └─────────────────┘
            │
      ┌─────┴─────┐
┌──────────┐   ┌──────────┐
│ PRINTER  │⟋20│ DISPLAY  │⟋16
└──────────┘   └──────────┘
```

## FIG. 1

FIG. 2

FIG. 3

50

Start → Select an 8X8 pixel block for rotation from the image data

52

Generate intermediate matrix

56

Save second 4 rows of intermediate matrix to 32-bit register R2 ← 54 Save first 4 rows of intermediate matrix to 32-bit register R1

58

Copy R1 into new 32-bit register R3 and R2 into new 32-bit register R4 → Is 90° rotation clockwise? 60

Yes | No

Zero out even bits of R1 and R4 62 | Zero out odd bits of R1 and R4 68

Zero out odd bits of R2 and R3 64 | Zero out even bits of R2 and R3 70

Shift R1 right 1-bit and R2 left 1-bit 66 | Shift R1 left 1-bit and R2 right 1-bit 72

Logical OR R1 with R4 74

Logical OR R2 with R3 76

Save rotated 8X8 pixel image from R1 and R2 in memory for display 78

## FIG. 4

15